# EUROPEAN PATENT SPECIFICATION

(11) **EP 2 697 053 B1**
(45) Date of publication and mention of the grant of the patent: **14.01.2015**
(21) Application number: 12713940.0
(22) Date of filing: 30.03.2012
(51) Int. Cl.: B31F 1/08

(54) **CREASING ACCESSORY AND METHOD OF PROVIDING A CREASE IN A SUBSTRATE**
RILLWERKZEUGZUBEHÖRSATZ UND VERFAHREN ZUM ERZEUGEN EINER FALTLINIE IN EINEM TRÄGERMATERIAL
ACCESSOIRE DE RAINURAGE ET PROCEDE POUR GENERER UN LIGNE DE RAINAGE DANS UN MATERIAU DE SUPPORT

(30) Priority: 14.04.2011 GB 201106279
(43) Date of publication of application: 19.02.2014
(73) Proprietor: Guillo-Crease Ltd, Glasgow G73 3BA (GB)
(72) Inventor: COLLINS, Craig, Glasgow G73 3BA (GB)
(74) Representative: Cameron, Stewart
(86) International application number: PCT/EP2012/055898
(87) International publication number: WO 2012/139910

(56) References cited:
- WO-A1-2006/131944
- US-A- 5 104 370

## Description

The present invention relates to a creasing accessory, in particular, a creasing accessory for providing a crease in a substrate to be cut in a guillotine assembly having a clamping arrangement. A method of providing a crease in a substrate is also provided.

When cutting substrates such as paper, card etc. commercial printers often use a guillotine arrangement which cuts across the substrate in a single, controlled cutting action to provide a neat cut at the appropriate location on the substrate. The location of the cut is typically determined by a manual or electronically controlled back gauge which automatically moves the substrate to precisely the correct position under the guillotine prior to cutting.

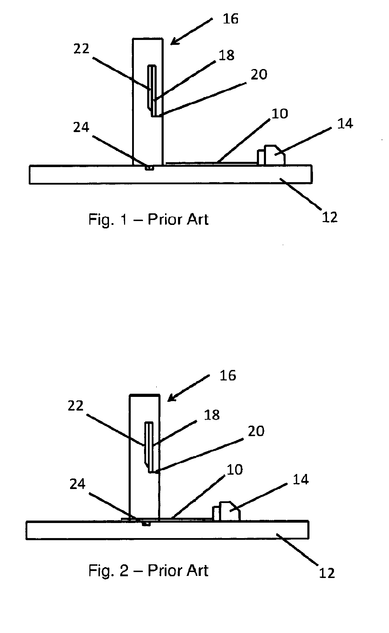

By way of background reference, a typical prior art guillotine assembly will now be described, with reference to Figs. 1 to 4 attached.

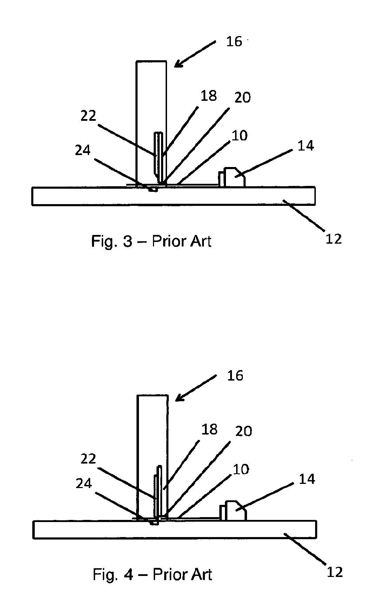

The guillotine operator first places a substrate 10 onto a cutting bed 12 such that it rests squarely against a back gauge 14 of the assembly (Fig. 1). Using a computerised control panel or manual adjustment mechanism (not shown), the operator then progresses the back gauge 14 forward until the substrate 10 is positioned beneath a guillotine assembly 16 at the appropriate position (Fig. 2). In order to flatten and remove any air between the substrate (which may be stacked in several sheets) the operator can move clamp 18 down such that it clamps the substrate onto the cutting bed 12. In this regard, the clamp 18 can be quickly "shuffled" up and down several times in a "clamp without cut" mode in order to ensure that the sheet(s) of substrate rests squarely and compactly on the cutting bed 12. If desired, the operator may choose to attach a clamp plate 20 to the clamp 18 in order to provide a greater clamping surface over the substrate 10. Once the substrate is positioned correctly, the clamp 18 is held in the clamping position ready for cutting (Fig. 3).

With the substrate 10 clamped in place, a metal cutting blade 22 then presses down onto the substrate cutting through it at the appropriate location (Fig. 4). A plastic cutting stick 24 is provided in a recess of the cutting bed 12 to provide a resilient cutting surface to assist with the cutting action as the cutting blade 22 cuts through the substrate 10. The plastic cutting stick 24 also protects the metal cutting blade 22 from damage during the cutting action.

Once the substrate 10 has been cut, the guillotine assembly 16 returns to its original configuration (Fig. 1) ready for the next cut.

Such guillotine assemblies are widely used in the printing industry; however, if the operator wishes to simply provide a crease in the substrate (to provide folds for brochures, leaflets, booklets etc.) without cutting through it, he must remove the substrate from the guillotine assembly and run it through a separate creasing machine.

Document WO-A-2006/131944 discloses a guillotine assembly which can be used for either for cutting or creasing purposes comprising removable male and female portions.

According to a first aspect of the present invention there is provided a creasing accessory adapted to crease a substrate in a guillotine assembly having a clamping arrangement, the creasing accessory comprising a removable male portion having an elongate protrusion and a removable female portion adapted to receive the male portion therein, and attachment means for removably securing the male and female portions between the clamping arrangement and a cutting bed, such that when the guillotine assembly is operated in a clamping movement, the male and female portions of the creasing accessory will co-act to crease substrate therebetween along a crease line.

Preferably the male portion is provided on the clamping arrangement of the guillotine assembly and the female portion is provided on the cutting bed of the guillotine assembly.

The male portion may comprise an elongate planar strip having a ridge protruding therefrom. Preferably, the ridge extends along the length of the planar strip substantially from one end to the other. The ridge may be provided on a leading edge of the strip.

The ridge may comprise an L-shaped protrusion. The L-shaped protrusion may be provided with a triangular cross section having a relatively thick base attached to the planar strip of the male portion and a relatively thin tip to facilitate creasing of the substrate whilst increasing the structural rigidity of the male protrusion.

The male portion may comprise a plastics material.

The female portion may comprise an elongate strip of material having a groove therein to form the elongate channel for receiving the male portion and substrate to be creased therein.

The female portion may comprise a plastics material dimensioned to be received within an existing cutting stick slot of the guillotine cutting bed.

The attachment means for removably securing the female portion to the cutting bed may comprise a friction fit between the elongate strip of material and the cutting stick slot.

The attachment means for removably securing the male portion to the clamping arrangement may comprise magnetic strips, double sided adhesive tape, retaining clips, hook and loop, or other suitable means.

The male portion is preferably adapted to mate with a clamp plate of the clamping arrangement.

A kit comprising at least a male portion and a plurality of female portions according to the first aspect of the present invention, the elongate channels in the plurality of female portions having different dimensions in order to provide creases of different dimensions as required by the particular application and substrate properties.

According to a second aspect of the present invention there is also provided a method of providing a crease in a substrate using a guillotine assembly having a clamping arrangement, the method comprising providing a removable male portion having an elongate protrusion, providing a removable female portion to receive the male portion therein between the clamping arrangement and a cutting bed, and operating the guillotine assembly in a clamping movement, such that the male and female portions of the creasing accessory co-act to crease the substrate therebetween along a crease line.

Preferably, the step of providing the removable male portion and the removable female portion on the assembly includes the step of removably attaching the male portion to a clamping arrangement of the guillotine assembly using suitable attachment means, and attaching the female portion to a cutting stick slot in the cutting bed by way of a friction fit.

The method may also comprise utilising a back gauge of the guillotine assembly to move the substrate through the guillotine assembly after each successive crease in order to provide a plurality of creases at appropriate locations on the substrate.

The method may also comprise the step of removing the male portion and the female portion once creasing of the substrate is complete in order to return the guillotine assembly to its original, cutting and clamping configuration.

Embodiments of the present invention will now be described, by way of example only, with reference to the accompanying drawings, in which:-
Figs. 1 to 4 are cross sectional schematic views consecutively illustrating a prior art guillotine assembly utilising a known clamping and cutting action;

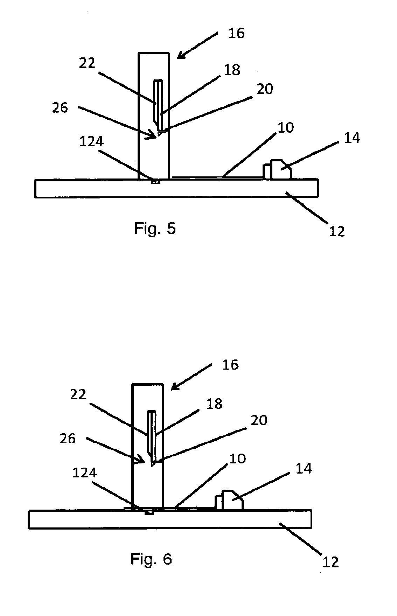

Figs. 5 to 7 are cross sectional schematic views consecutively illustrating the accessory of the present invention installed on the guillotine assembly of Figs. 1 to 4, in use during a creasing operation;
Fig. 8 is a close up view of the area A of Fig. 7 showing the creasing action in greater detail;
Fig. 9 is a side view looking along the length of a male portion of the accessory;
Fig. 10 is a perspective view of the male portion of Fig. 9;
Fig. 11 is a side view looking along the length of several female portions of the accessory having differing widths of groove to provide a variety of crease formations;
Fig. 12 is a perspective view of the female portion of Fig. 11.

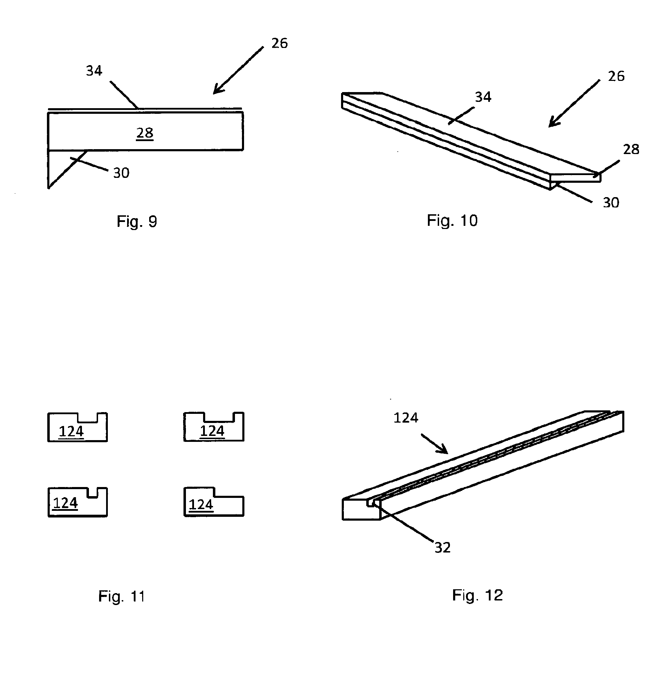

With particular reference to Figs. 9 and 10 a male portion, generally designated 26, of the creasing accessory will now be described. The male portion 26 comprises a thin elongate attachment portion 28 having an elongate protrusion 30 running along its leading edge.

Attachment means are provided on top of the attachment portion 28. The attachment means in the presently described embodiment are provided by a strip of magnetic material 34; however, it will be appreciated that many other forms of attachment means could be utilised; for example, double sided webbed adhesive tape, retaining clips, hook and loop, or other suitable means. This provides a temporary form of "quick-fit" attachment which is also easily removed when no-longer required.

In the present embodiment, the elongate protrusion 30 takes the form of a triangular cross sectioned ridge; however, the skilled reader will appreciate that the protrusion 30 could be any shape capable of providing the required creasing effect; for example, it could be a flat member extending at right angles from the attachment portion 28 to form an L-shaped cross section, or alternatively it could comprise a raised, rounded edge etc.

Furthermore, although the protrusion 30 is shown in the present embodiment as a continuous elongated ridge it could alternatively be non-continuous so as to provide a partial crease along the substrate if required.

In the embodiment shown, the protrusion 30 is attached to the attachment portion 28 during or after manufacture of the male portion 26; however, it could alternatively be integrally formed with the attachment portion 28.

A female portion 124 of the creasing accessory will now be described with particular reference to Figs. 11 and 12. The female portion 124 comprises a strip of material having a channel or groove 32 running therealong. As shown in Fig. 11, the groove 32 may be provided in different dimensions on a number of strips to provide a variety of different set-ups dependent upon the required application.

In the present embodiment, the groove 32 takes the form of a u-shaped groove; however, the skilled reader will appreciate that it could be any shape capable of providing the creasing effect; for example, it could be a V-shaped groove, curved groove etc. and may be chosen to correspond with the male portion 26 and or the substrate being creased.

The groove 32 may alternatively be provided by a notch removed from one edge of the female member 124 such that the groove 32 is provided by one edge of the female member 124 and one edge of a corresponding recess wall in the cutting bed 12.

Furthermore, although the groove 32 is shown in the present embodiment as a continuous groove it could alternatively be non-continuous so as to provide a partial crease along the substrate if required.

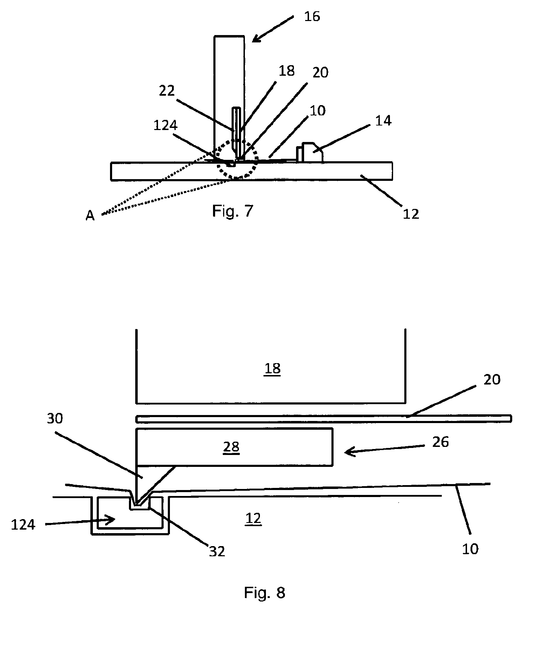

When it is desired to provide a *crease* rather than a *cut* in the substrate 10 the male portion 26 must be attached either directly to the clamping arrangement 18 or onto the clamp plate 20, which is then attached to the clamping arrangement 18 in the normal fashion. In the presently described embodiment, the male portion 26 is attached to the clamp plate 20 first. To achieve this, a strip of magnetic material 34 is attached along the attachment portion 28. The male portion 26 is then placed onto the metal clamp plate 20 such that it is held magnetically thereto, as best illustrated in Fig. 8.

The cutting stick 24 which is normally in place for *cutting* actions, is then removed from its recess in the cutting bed 12 and replaced with the female portion 124 of the creasing accessory. The outer dimensions of the female portion 124 are geometrically similar to the cutting stick 24 in order to provide a tight fit in the cutting bed 12 recess, which ensures that the female portion 124 is held secure in the cutting bed 12 recess during creasing.

In use, and with particular reference to Figs. 7 and 8, the operator then places the substrate 10 against the back gauge 14 and selects the location at which a crease in the substrate 10 is desired. The operator then selects the guillotine's built in "clamp without cut" function which causes the clamp 18 to be brought down onto the substrate 10. As it does so, the protrusion 30 on the male portion 26 is forced into the channel 32 of the female portion 124, trapping the substrate 10 therebetween. This causes the substrate 10 to crease along a neat, controlled line in a single clamp and crease action at the correct position on the substrate.

The above described creasing process is repeated along the substrate 10 until the required creases have been formed. This may involve turning the substrate 10 over in order to create opposite sense creases for e.g. concertina folds.

Once the creasing operation is complete, the clamp plate 20 (and hence the male portion 26) is removed from the clamp 18. The female portion 124 is then removed from the recess in the cutting bed 12 and the previously removed cutting stick 24 reinserted in order to allow normal cutting and clamping to be resumed.

The male portion 26 can then also be removed from the clamp plate 20 with a sliding action; the properties of the magnetic strip 34 are well suited for this because this ensures that the male portion 26 is held very securely onto the face of the clamp plate 20 during creasing whilst allowing the operator to easily slide the male portion 26 off the clamp plate 20 once creasing is complete.

Modifications and improvements may be made to the foregoing, without departing from the scope of the invention, for example:
The female portion 124 may be provided as part of a kit comprising several female portions having differently dimensioned grooves to allow creasing on different substrates. These may also be colour coded to allow the operator to easily identify the correct strip for a particular application.

Although in the embodiment shown, the male portion is provided above, on the clamp and the female portion is provided below, on the cutting bed, this could be reversed such that the male portion is provided below, on the cutting bed, and the female portion is provided above, on the clamp if desired.

## Claims

1. A creasing accessory adapted to crease a substrate (10) in a guillotine assembly (16) having a clamping arrangement (18, 20), the creasing accessory comprising:-
a removable male portion (26) having an elongate protrusion (30) and a removable female portion (124) adapted to receive the male portion therein, and
attachment means (34) for removably securing the male and female portions between the clamping arrangement (18, 20) and a cutting bed (12), such that when the guillotine assembly is operated in a clamping movement, the mate and female portions of the creasing accessory will co-act to crease substrate (10) therebetween along a crease line.

2. A creasing accessory according to claim 1, wherein the removable female portion (124) comprises an elongated channel (32) to receive the male portion (26) therein.

3. A creasing accessory according to either of claims 1 or 2, wherein the male portion (26) is attached to the clamping arrangement (18, 20) of the guillotine assembly (16) and the female portion (124) is attached to the cutting bed (12) of the guillotine assembly.

4. A creasing accessory according to any preceding claim, wherein the male portion (26) comprises an elongate attachment portion (28) having a ridge (30) protruding therefrom and wherein the ridge (30) extends along the length of the elongate attachment portion (28) substantially from one end to the other.

5. A creasing accessory according to claim 4, wherein the ridge (30) comprises an L-shaped protrusion provided on a leading edge of the elongate attachment portion (28).

6. A creasing accessory according to claim 5, wherein the L-shaped protrusion is provided wit triangular cross section having a relatively thick base attached to the elongate attachment portion (28) of the male portion (26) and a relatively thin tip to facilitate creasing of the substrate (10) whilst increasing the structural rigidity of the male protrusion.

7. A creasing accessory according to any preceding claim, wherein the female portion (124) comprise an elongated strip of material having a groove therein to form the elongated channel (32) or receiving the male portion (26) and substrate (10) to be creased therein.

8. A creasing accessory according to claim 7, wherein the female portion (124) comprises a plastics material dimensioned to be received within an existing cutting stick slot of the guillotine cutting bed (12)

9. A creasing accessory according to any preceding claim, wherein the attachment means for removably securing the female portion (124) to the cutting bed (12) comprises a friction fit between the elongated strip of material and the cutting stick slot.

10. A creasing accessory according to any preceding claim, wherein the attachment means for removably securing the male portion (26) to the clamping arrangement (18,20) comprises at least one of a magnetic strip (34), double-sided adhesive tape, retaining clip, hook and loop, or other suitable means.

11. A creasing accessory according to any preceding claim, wherein the male portion (26) adapted to mate with a clamp plate of the clamping arrangement (18,20).

12. A kit comprising at least a male portion (26) and a plurality of female portions (124) according to claim 2, the elongate channels (32) in the plurality of female portions having different dimensions from one another in order to provide creases of different dimensions as required by the particular application and substrate properties.

13. A method of providing a crease in a substrate (10) using a guillotine assembly (16) having a clamping arrangement (18,20), the method comprising providing a removable male portion (26) having an elongate protrusion (30), providing a removable female portion (124) to receive the male portion therein between the clamping arrangement and a cutting bed, and operating the guillotine assembly in a clamping movement, such that the male and female portions of the creasing accessory co-act to crease the substrate therebetween along a crease line.

14. A method of providing a crease in a substrate according to claim 13, wherein the step of providing the removable male portion (26) and the removable female portion (124) on the assembly includes the step of removably attaching the male portion to a clamping arrangement (18,20) of the guillotine assembly using suitable attachment means (34), and removably attaching the female portion to a cutting stick slot in the cutting bed by way of a friction fit.

15. A method of providing a crease in a substrate according to either of claims 13 or 14, further comprising utilising a back gauge (14) of the guillotine assembly (16) to move the substrate (10) through the guillotine assembly after each successive crease in order to provide a plurality of creases at appropriate locations on the substrate and removing the male portion (26) and the female portion (124) once creasing of the substrate is complete in order to return the guillotine assembly to its original, cutting and clamping configuration.

## Patentansprüche

1. Ein Rillwerkzeugzubehörsatz, der angepasst ist, um ein Trägermaterial (10) in einem Querschneidersystem (16), das eine Klemmanordnung (18, 20) aufweist, zu falten, wobei der Rillwerkzeugzubehörsatz Folgendes umfasst:
einen entfernbaren Außenabschnitt (26), der einen länglichen Vorsprung (30) aufweist, und einen entfernbaren Innenabschnitt (124), der angepasst ist, um den Außenabschnitt darin aufzunehmen, und
Befestigungsmittel (34) zum entfernbaren Sichern des Außenabschnitts und des Innenabschnitts zwischen der Klemmanordnung (18, 20) und einem Schneidebett (12), so dass, wenn das Querschneidersystem in einer Klemmbewegung betätigt wird, der Außenabschnitt und der Innenabschnitt des Rillwerkzeugzubehörsatzes zusammenwirken, um das Trägermaterial (10) dazwischen entlang einer Faltlinie zu falten.

2. Rillwerkzeugzubehörsatz gemäß Anspruch 1, wobei der entfernbare Innenabschnitt (124) einen verlängerten Kanal (32) umfasst, um den Außenabschnitt (26) darin aufzunehmen.

3. Rillwerkzeugzubehörsatz gemäß einem der Ansprüche 1 oder 2, wobei der Außenabschnitt (26) an der Klemmanordnung (18, 20) des Querschneidersystems (16) befestigt ist und der Innenabschnitt (124) an dem Schneidebett (12) des Querschneidersystems befestigt ist.

4. Rillwerkzeugzubehörsatz gemäß einem vorhergehenden Anspruch, wobei der Außenabschnitt (26) einen länglichen Befestigungsabschnitt (28) umfasst, von dem eine Rippe (30) davon vorsteht, und wobei sich die Rippe (30) entlang der Länge des länglichen Befestigungsabschnitts (28) im Wesentlichen von einem Ende zum anderen erstreckt.

5. Rillwerkzeugzubehörsatz gemäß Anspruch 4, wobei die Rippe (30) einen L-förmigen Vorsprung, der auf einer Vorderkante des länglichen Befestigungsabschnitts (28) bereitgestellt ist, umfasst.

6. Rillwerkzeugzubehörsatz gemäß Anspruch 5, wobei der L-förmige Vorsprung mit einem dreieckigen Querschnitt bereitgestellt ist, wobei an dem länglichen Befestigungsabschnitt (28) eine relativ dicke Basis des Außenabschnitts (26) und eine relativ dünne Spitze befestigt ist, um das Falten des Trägermaterials (10) zu erleichtern, während die Struktursteifigkeit des Außenabschnitts erhöht wird.

7. Rillwerkzeugzubehörsatz gemäß einem vorhergehenden Anspruch, wobei der Innenabschnitt (124) einen verlängerten Materialstreifen mit einer Nut darin umfasst, um den verlängerten Kanal (32) zum Aufnehmen des Außenabschnitts (26) zu bilden und das Trägermaterial (10) darin zu falten.

8. Rillwerkzeugzubehörsatz gemäß Anspruch 7, wobei der Innenabschnitt (124) ein Kunststoffmaterial umfasst, das so bemessen ist, um innerhalb eines bestehenden Schneidestabschlitzes des Querschneiderschneidebetts (12) aufgenommen zu werden.

9. Rillwerkzeugzubehörsatz gemäß einem vorhergehenden Anspruch, wobei das Befestigungsmittel zum entfernbaren Sichern des Innenabschnitts (124) an dem Schneidebett (12) eine Reibpassung zwischen dem verlängerten Materialstreifen und dem Schneidestabschlitz umfasst.

10. Rillwerkzeugzubehörsatz gemäß einem vorhergehenden Anspruch, wobei das Befestigungsmittel zum entfernbaren Sichern des Außenabschnitts (26) an der Klemmanordnung (18, 20) mindestens eines von einem Magnetband (34), einem doppelseitigen Klebeband, einem Haltebügel, einem Hakenband oder einem anderen geeigneten Mittel umfasst.

11. Rillwerkzeugzubehörsatz gemäß einem vorhergehenden Anspruch, wobei der Außenabschnitt (26) angepasst ist, um mit einer Klemmscheibe der Klemmanordnung (18, 20) zusammenzupassen.

12. Ein Kit, umfassend mindestens einen Außenabschnitt (26) und eine Vielzahl von Innenabschnitten (124) gemäß Anspruch 2, wobei die länglichen Kanäle (32) in der Vielzahl von Innenabschnitten unterschiedliche Abmessungen voneinander aufweisen, um je nach der erforderlichen bestimmten Anwendung und den erforderlichen Trägermaterialeigenschaften Falten mit unterschiedlichen Abmessungen bereitzustellen.

13. Ein Verfahren zum Bereitstellen einer Falte in einem Trägermaterial (10) unter Verwendung eines Querschneidersystems (16), das eine Klemmanordnung (18, 20) aufweist, wobei das Verfahren das Bereitstellen eines entfernbaren Außenabschnitts (26), der einen länglichen Vorsprung (30) aufweist, das Bereitstellen eines entfernbaren Innenabschnitts (124), um den Außenabschnitt darin zwischen der Klemmanordnung und einem Schneidebett aufzunehmen, und das Betätigen des Querschneidersystems in einer Klemmbewegung, so dass der Außenabschnitt und der Innenabschnitt des Rillwerkzeugzubehörsatzes zusammenwirken, um das Trägermaterial dazwischen entlang einer Faltlinie zu falten, umfasst.

14. Ein Verfahren zum Bereitstellen einer Falte in einem Trägermaterial gemäß Anspruch 13, wobei der Schritt des Bereitstellens des entfernbaren Außenabschnitts (26) und des entfernbaren Innenabschnitts (124) auf dem System den Schritt des entfernbaren Befestigens des Außenabschnitts an einer Klemmanordnung (18, 20) des Querschneidersystems unter Verwendung eines geeigneten Befestigungsmittels (34) und des entfernbaren Befestigens des Innenabschnitts an einem Schneidestabschlitz in dem Schneidebett durch Reibpassung einschließt.

15. Ein Verfahren zum Bereitstellen einer Falte in einem Trägermaterial gemäß einem der Ansprüche 13 oder 14, ferner umfassend das Verwenden eines Sattels (14) des Querschneidersystems (16), um das Trägermaterial (10) durch das Querschneidersystem nach jeder aufeinanderfolgenden Falte zu bewegen, um eine Vielzahl von Falten an geeigneten Stellen auf dem Trägermaterial bereitzustellen und das Entfernen des Außenabschnitts (26) und des Innenabschnitts (124), wenn das Falten des Trägermaterials abgeschlossen ist, um das Querschneidersystem in seine ursprüngliche Schneide- und Klemmkonfiguration zurück zu bringen.

## Revendications

1. Un accessoire de rainurage adapté pour rainurer un matériau de support (10) dans un assemblage de massicot (16) ayant un agencement de serrage (18, 20), l'accessoire de rainurage comprenant :
une portion mâle amovible (26) ayant une saillie allongée (30) et une portion femelle amovible (124) adaptée pour recevoir en son sein la portion mâle, et
un moyen d'attache (34) destiné à fixer de manière amovible les portions mâle et femelle entre l'agencement de serrage (18, 20) et une platine de découpe (12), de telle sorte que lorsque l'assemblage de massicot est actionné selon un déplacement de serrage, les portions mâle et femelle de l'accessoire de rainurage agiront conjointement pour rainurer le matériau de support (10) entre elles le long d'une ligne de rainure.

2. Un accessoire de rainurage conformément à la revendication 1, dans lequel la portion femelle amovible (124) comprend un canal allongé (32) destiné à recevoir en son sein la portion mâle (26).

3. Un accessoire de rainurage conformément à l'une ou l'autre des revendications 1 et 2, dans lequel la portion mâle (26) est attachée à l'agencement de serrage (18, 20) de l'assemblage de massicot (16) et la portion femelle (124) est attachée à la platine de découpe (12) de l'assemblage de massicot.

4. Un accessoire de rainurage conformément à n'importe quelle revendication précédente, dans lequel la portion mâle (26) comprend une portion d'attache allongée (28), possédant une nervure (30) faisant saillie à partir de celle-ci et dans lequel la nervure (30) s'étend sur la longueur de la portion d'attache allongée (28), substantiellement d'une extrémité à l'autre.

5. Un accessoire de rainurage conformément à la revendication 4, dans lequel la nervure (30) comprend une saillie configurée en L fournie sur un bord d'attaque de la portion d'attache allongée (28).

6. Un accessoire de rainurage conformément à la revendication 5, dans lequel la saillie configurée en L est dotée d'une coupe triangulaire avec une base relativement épaisse attachée à la portion d'attache allongée (28) de la portion mâle (26) et un bout relativement mince pour faciliter le rainurage du matériau de support (10) tout en augmentant la rigidité structurelle de la saillie mâle.

7. Un accessoire de rainurage conformément à n'importe quelle revendication précédente, dans lequel la portion femelle (124) comprend une bande allongée de matériau au sein duquel se trouve un sillon afin de former le canal allongé (32) destiné à recevoir la portion mâle (26) et le matériau de support (10) devant y être rainuré.

8. Un accessoire de rainurage conformément à la revendication 7, dans lequel la portion femelle (124) comprend un matériau plastique dimensionné pour être reçu au sein d'une fente de règle de découpe existante de la platine de découpe de massicot (12).

9. Un accessoire de rainurage conformément à n'importe quelle revendication précédente, dans lequel le moyen d'attache destiné à fixer de manière amovible la portion femelle (124) à la platine de découpe (12) comprend un ajustement par frottement entre la bande allongée de matériau et la fente de règle de découpe.

10. Un accessoire de rainurage conformément à n'importe quelle revendication précédente, dans lequel le moyen d'attache destiné à fixer de manière amovible la portion mâle (26) à l'agencement de serrage (18, 20) comprend au moins soit une bande magnétique (34), un ruban adhésif double-face, une pince, un crochet ou une boucle de retenue, ou un autre moyen approprié.

11. Un accessoire de rainurage conformément à n'importe quelle revendication précédente, dans lequel la portion mâle (26) est adaptée pour s'accoupler avec une plaque de serrage de l'agencement de serrage (18, 20).

12. Un kit comprenant au moins une portion mâle (26) et une pluralité de portions femelles (124) conformément à la revendication 2, les canaux allongés (32) dans la pluralité de portions femelles ayant des dimensions différentes les uns par rapport aux autres afin de générer des rainures de dimensions différentes selon ce qui est requis par l'application particulière et les propriétés du matériau de support.

13. Un procédé destiné à générer une rainure dans un matériau de support (10) à l'aide d'un assemblage de massicot (16) ayant un agencement de serrage (18, 20), le procédé comprenant le fait de fournir une portion mâle amovible (26) ayant une saillie allongée (30), le fait de fournir une portion femelle amovible (124) pour recevoir en son sein la portion mâle entre l'agencement de serrage et une platine de serrage, et le fait d'actionner l'assemblage de massicot selon un déplacement de serrage, de telle sorte que les portions mâle et femelle de l'accessoire de rainurage agissent conjointement pour rainurer le matériau de support entre elles le long d'une ligne de rainure.

14. Un procédé destiné à générer une rainure dans un matériau de support conformément à la revendication 13, dans lequel l'étape consistant à fournir la portion mâle amovible (26) et la portion femelle amovible (124) sur l'assemblage inclut l'étape consistant à attacher de façon amovible la portion mâle à un agencement de serrage (18, 20) de l'assemblage de massicot à l'aide d'un moyen d'attache approprié (34), et à attacher de façon amovible la portion femelle à une fente de règle de découpe dans la platine de découpe au moyen d'un ajustement par frottement.

15. Un procédé destiné à générer une rainure dans un matériau de support conformément à l'une ou l'autre des revendications 13 et 14, comprenant en outre le fait d'utiliser une butée arrière (14) de l'assemblage de massicot (16) afin de déplacer le matériau de support (10) de part et d'autre de l'assemblage de massicot après chaque rainure successive afin de générer une pluralité de rainures au niveau d'emplacements appropriés sur le matériau de support et le fait de retirer la portion mâle (26) et la portion femelle (124) une fois que le rainurage du matériau de support est terminé afin de faire revenir l'assemblage de massicot à sa configuration de serrage et de découpe originale.
